# EUROPEAN PATENT SPECIFICATION

(11) **EP 0 757 929 B1**
(45) Date of publication and mention of the grant of the patent: **08.12.1999**
(21) Application number: 96112803.0
(22) Date of filing: 08.08.1996
(51) Int. Cl.: B23D 45/12, B23D 45/10, B23D 21/04

(54) **Cutting machine for cutting round and square pipes**
Schneidmaschine für Rund- oder Vierkantrohre
Machine de coupe pour tuyaux circulaires ou carrées

(30) Priority: 09.08.1995 JP 20336095
(43) Date of publication of application: 12.02.1997
(73) Proprietor: NAKATA MANUFACTURING COMPANY LIMITED, Osaka-shi Osaka 532 (JP); Shinko Kikai Corporation, Chigasaki-shi, Kanagawa (JP)
(72) Inventor: Shimbori, Takashi, Fujisawa-shi, Kanagawa (JP)
(74) Representative: VOSSIUS & PARTNER

(56) References cited:
- DE-A- 4 101 749
- DE-A- 4 422 935
- FR-A- 2 564 347
- GB-A- 884 591
- US-A- 2 516 817
- US-A- 4 771 667

## Description

### 1. Field of the Invention

The present invention relates to a cutting machine for cutting pipes according to the preamble of claim 1 and as known from e.g. GB-A-884591.

Conventional machines for cutting pipes can be classified into, for example, 1) grind stone cutting machines, 2) round saw cutting machines, and 3) press cutting machines. Moreover, there have heretofore been used 4) disk cutter-type cutting machines for cutting round pipes, as well as plasma cutting machines and friction saw cutting machines for cutting square pipes.

The above-mentioned machines, however, have the following defects.
In case 1), the outer diameter of the cutter decreases due to wear with an increase in the number of cutting operations, and the cutter stroke must be adjusted. Besides, the cutter has a short life due to wear. Moreover, the cut surfaces develop burrs as a result of the heat and must be deburred, which is cumbersome.
In case 2), the cut surfaces develop burrs as a result of the heat and must be deburred, which is cumbersome. Besides, the cutter has a short life.
In case 3), the end of the pipe is deformed to a notable degree with a single-action press. With a double-action press, difficulty is involved in adjusting the clearance of the blades which execute two-stage cutting using a scraper blade and a cutter blade, and the end of the pipe is deformed.
In the case 4), the cutting machine must be changed for more round pipes and for square pipes, requiring more preparation time. Moreover, two cutting machines are required. With plasma cutting, furthermore, the cut surface is so coarse that the cutting must be effected again.

In order to eliminate these defects, there has been proposed a cutting machine using a milling cutter. With this cutting machine, the cut surface is smooth with little burr formation, however, problems such as low cutting rate and low feeding rate result in increased cutting time.

With the above-mentioned cutters, furthermore, the pipe is cut from the upper side toward the lower side. Therefore, the cutter stroke must be as long as the diameter of the piper requiring a large cutting machine.

Examples of the above-mentioned milling cutter include devices disclosed in Japanese Unexamined Patent Publications (Kokai) Nos. 59-69212 and 59-69213. These devices are steel pipe-cutting machines of the type in which milling cutters rotate while revolving round a pipe that is to be cut. Concretely speaking, these devices are the steel pipe-cutting machines in which a plurality of cutters are rotated to straight-cut the tubular walls of the pipe to be cut and are further revolved to effect the cutting, wherein the plurality of milling cutters are rotated in synchronism by a single motor via a planetary gear mechanism, whereas the straight cutting and the revolutionary cutting are executed simultaneously by separate motors, in order to simplify the mechanism and to reduce the cost.

With these devices, however, the rotary milling cutters simply move straight in the radial direction. Besides, limitation is imposed on the cutting speed and the amount of feeding the cutter, since the wedge at the rear end of the flange is moved up and down by pushing an inclined portion of the face plate and the cutting is effected by deflecting the center of turn of the cutter head. Therefore, an extended period of time is required for the cutting operation and, besides, the wedge portion must be regularly checked at all times to maintain precision. Moreover, the machine, especially for a square pipe cutting machine, requires complex cutting control mechanisms and the resultant cutting pipes having a differential cutting surface in the same cutting plane.

In order to improve the above-mentioned milling cutters, there has been developed a steel pipe-cutting machine as disclosed in Japanese Unexamined Patent Publication (Kokai) No. 3-221311. This steel pipe-cutting machine comprises a plurality of cutter heads having a guide mechanism that moves straight in the biaxial directions (X-Y directions) in synchronism with a pipe-forming speed at the time when the pipe is to be cut, a feed mechanism and milling cutters; and a clamp device for holding and fastening the pipe in the vicinity of the milling cutters, which are mounted on a running cart, and further comprises a control unit for controlling the revolution of the motor that feeds the cutter heads based upon input data related to cutting conditions such as shape, size and the like of the pipe. This device is capable of correctly cutting the steel pipes since the steel pipes are cut being controlled by the CPU based upon the input data related to the cutting conditions such as shapes, sizes and the like of the pipes, accompanied.

However, this device requires an independent cutter head and incidental facilities in the biaxial directions (X-Y directions) to secure rigidity, respectively. Therefore, the machine becomes large in scale and complex, and very expensive in addition to slow cutting speed.

The present invention was accomplished in order to solve the above-mentioned defects and has succeeded in providing a very simple and cheap facility.

The present invention was accomplished in order to cut round pipes and the square pipes using the same blade with a cutter stroke which is as small as possible. According to the present invention, a cutting machine includes the combination of features of claim 1.

The travel amount of the cutters from the center of the disk is controlled to cut either round pipes or square pipes.

The travel amount of the cutters is controlled by fastening a ball case having a ball screw mechanism to the slider which supports the cutter, and inserting a threaded shaft rotated by a servo motor in the ball case so as to engage with a ball in the ball case.

### BRIEF DESCRIPTION OF THE DRAWINGS

Fig. 1 is a front view illustrating a cutting machine for cutting round pipes and square pipes according to an embodiment of the present invention.
Fig. 2 is a side view of Fig. 1.
Fig. 3 is a front view illustrating the relationship between the cutters and motors in Fig. 2.
Fig. 4 is a side view of Fig. 3.
Fig. 5 is a side view of when Fig. 3 is viewed from below.
Fig. 6 is a side view illustrating the internal structure of Fig. 2.
Fig. 7 is a sectional view along the line A-A of Fig. 6.
Fig. 8 is a diagram of operation illustrating the locus of a cutter when a round pipe is cut by the cutting machine for cutting round and square pipes of the present invention.
Fig. 9 is a diagram of operation illustrating the locus of a cutter when a square pipe is cut by the cutting machine for cutting round and square pipes of the present invention.

The invention will now be described with reference to the accompanying drawings.

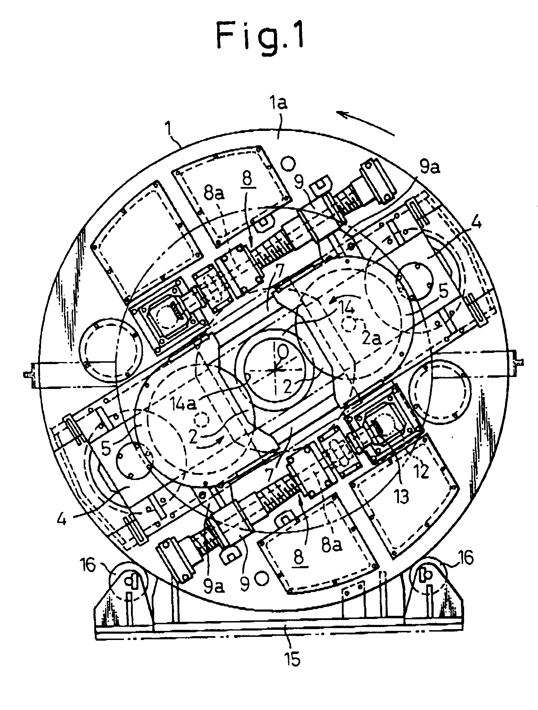

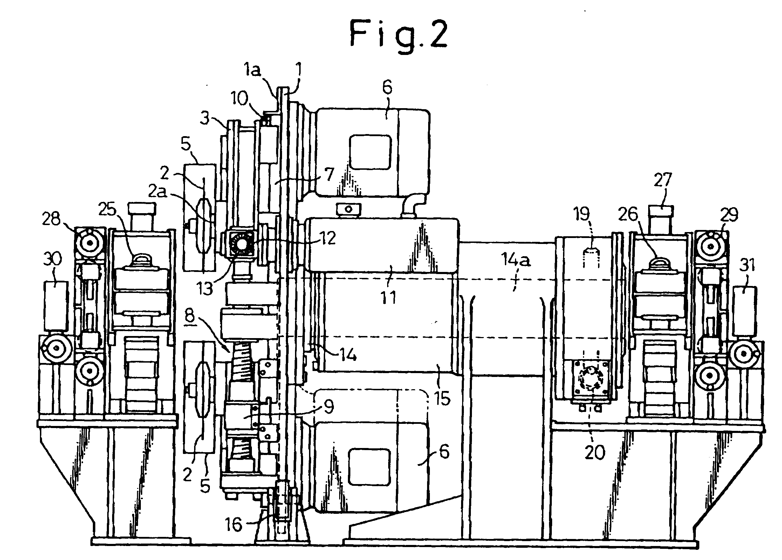

Fig. 1 is a front view illustrating the whole cutting machine for cutting round and square pipes according to the present invention, and Fig. 2 is a side view thereof. In Figs. 1 and 2, a pair of sliders 4 is arranged on the surface 1a of a large disk 1 in the direction of its diameter to support cutters 2 at an equal distance from the center thereof and drive systems 3 therefor. The cutters 2 having a rotary disk type shape are for milling operations and have a milling blade and are rotated at a peripheral velocity of from about 200 to about 300 mm/min. In Fig. 2, reference numeral 5 denotes covers for the cutters 2.

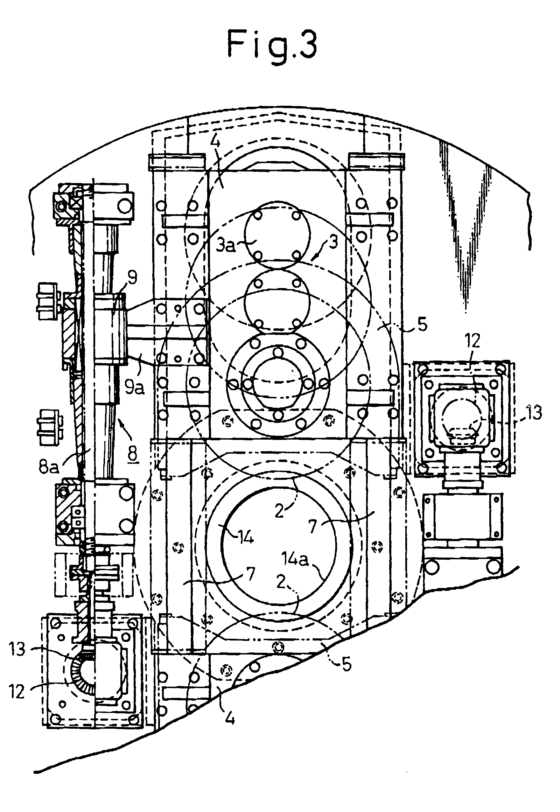

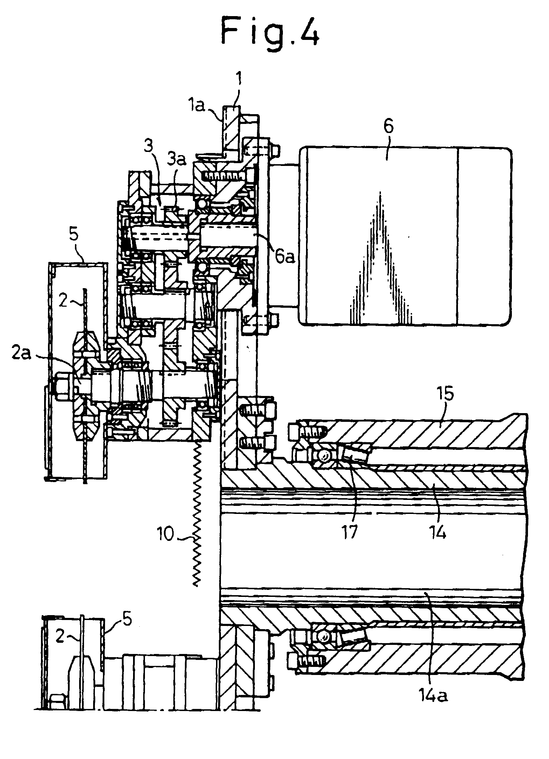

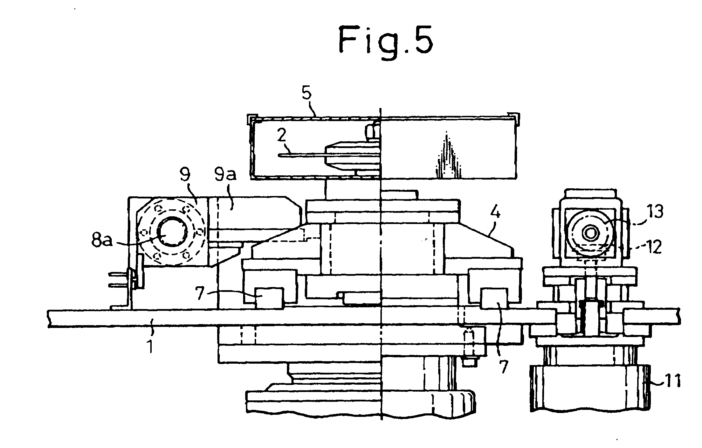

Figs. 3 to 5 illustrate the relationship between the cutters 2 and motors 6 for driving the cutters. To the disk 1 are fastened a pair of guide rails 7, 7 at the right and left at equal distances along a straight line connecting the centers of the cutters 2, 2, and the sliders 4 are guided by the guide rails to move on the surface 1a of the disk 1 in the direction of its diameter.

The drive system 3 is drivably coupled to the motor 6 mounted on the back surface of the disk 1. A cutter shaft 2a of the cutter 2 is coupled to a motor shaft 6a via a gear train 3a in the drive system 3. When the motor 6 rotates, therefore, the rotation is transmitted to the cutter 2. A ball screw mechanism 8 fastened to one side of the disk 1 is provided with a movable ball case. A portion 9a of the case 9 extending toward the slider 4 is fastened to the slider 4. Therefore, the slider 4 moves on the guide rail 7 accompanying the motion of the ball case 9. In the drawings, reference numeral 10 denotes a spring for preventing the motion of the slider 4 with respect to the guide rail 7.

The ball screw mechanism 8 operates via a pair of bevel gears 12 and 13 rotated by a servo motor 11 provided on the back surface of the disk 1 like the above-mentioned motor 6. The ball screw mechanism 8 comprises a threaded shaft 8a included in a known ball case 9, a ball nut, etc. When the threaded shaft 8a is rotated by the servo motor 11, the ball case 9 moves on the threaded shaft 8a to approach, or move away from, the center O of the disk 1.

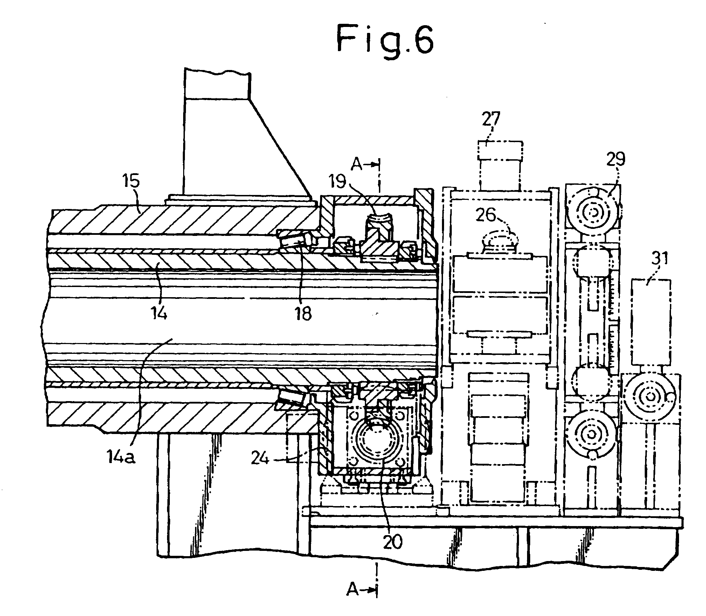

Referring to Fig. 6 which is a side view of the internal structure of Fig. 2, the disk 1 is fastened at its center to a horizontal hollow shaft 14 and is maintained upright, and the peripheral surface thereof is in contact with the outer peripheries of the right and left rollers 16, 16 that are provided on a machine frame 15 to rotate, in order to prevent deflection during the rotation.

The horizontal hollow shaft 14 is supported at both its ends by bearings 17 and 18 provided in the machine frame 15 to rotate with respect to the machine frame 15.

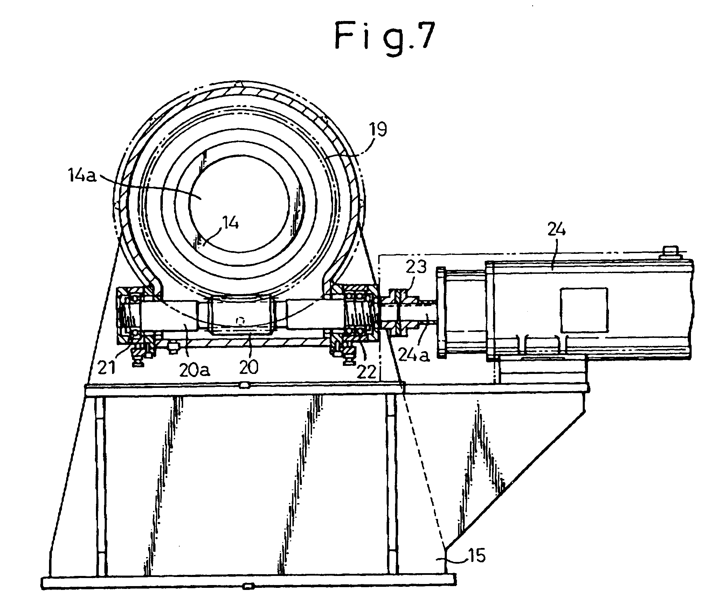

A worm wheel 19 is fastened to one end of the horizontal hollow shaft 14. A worm gear 20 provided on the side of the machine frame 15 is in mesh with the worm wheel 19 as shown in Fig. 7, and a shaft 20a of the worm gear 20 is supported by bearings 21 and 22 on both sides to rotate. One end of the shaft 20a is coupled, via a joint 23, to a shaft 24a of a motor 24 for driving the disk 1 provided on the machine frame 15. The rotation of the motor 24 is transmitted to the worm wheel 19 from the worm gear 20, whereby the horizontal hollow shaft 14 rotates, and the disk 1 together therewith rotates in the direction of an arrow shown in Fig. 1.

A pipe member worked into a plate by a rolling mill that is not shown is subjected to a next step to form an electro welded tube of a circular shape or a square shape and is fed from the right side in Fig. 6, and is inserted in a hole 14a of the horizontal hollow shaft 14 and is fed toward the left.

In Fig. 2, reference numeral 25 denotes a front chuck for fastening the pipe inserted in the hole 14a of the horizontal hollow shaft 14, and 26 denotes a rear chuck, which both effect the fastening being actuated by air cylinders 27. On the front side of the chuck 25 and on the rear side of the rear chuck 26, there are provided, neighboring thereto, guide rollers 28 and 29 for restraining the pipe inserted in the hole 14a of the horizontal hollow shaft 14 in the up-and-down direction. On the front side of the guide roller 28 and on the rear side of the guide roller 29, furthermore, there are provided, neighboring thereto, guide rollers 30 and 31 for limiting the pipe in the right-and-left direction.

The operation will be described below.

The pipe that is bent and welded after having passed through the rolling mill, that is not shown, is then inserted in the horizontal hollow shaft 14 of the cutting machine of the present invention. To cut the pipe into a suitable length, both sides of the outer periphery of the pipe of a predetermined length are positioned by the guide rollers 28, 29, 30 and 31, and are clamped by the front chuck 25 and rear chuck 26 using the air cylinders 27 to be ready for the cutting operation.

Then, at a position of the cutter 2, the front portion of the pipe is cut from the rear portion.

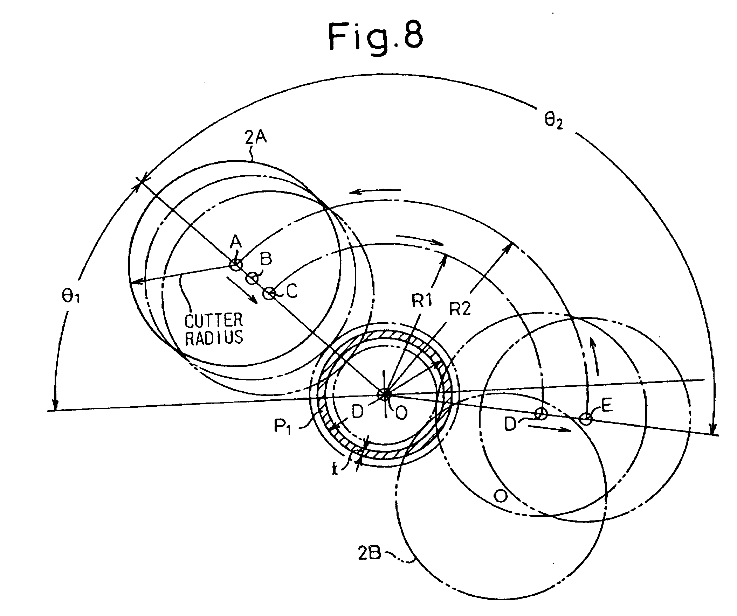

In the case of cutting a round pipe P1 as shown in a front view of Fig. 8, the cutter 2A (cutter of the upper side) may be located at an angle θ1 from a horizontal line that passes through the center O of the disk 1. The servo motor 11 is then rotated so that the ball case 9 of the ball screw mechanism 8 approaches the center O of the disk 1 and that the center of the cutter 2A moves from a position A to a position B via the slider 4 and further moves inwards. Then, the blade tip of the cutter 2 comes into contact with the circumference of the round pipe P1 to start the cutting operation.

As the center of the cutter 2A moves to a position C, the blade tip of the cutter 2A arrives at a position indicated by a two-dot chain line, and the outside wall t of the round pipe P1 is partly cut. The cutting is also effected by the cutter 2B (cutter 2 of the lower side) that is provided symmetrically with respect to the center O of the disk 1.

Therefore, if the cutter 2A (the same also holds for 2B) on the disk 1 has a radius R1 of rotation, the position C is shifted to a position D when the disk 1 is turned clockwise over an angle θ2 maintaining this radius R1. Here, the pipe P1 that is fastened is cut the outside wall t on one side along the outer circumference thereof. Due to the cutter 2B, similarly, the outside wall t of the other side is cut along the outer circumference. Here, θ2 is from 120° to 140°, and D denotes the diameter of a round pipe.

At a moment the cutting is finished, the cutter 2 is returned back to a position E to execute the next cutting operation. A two-dot chain line in the round pipe P1 denotes the locus of the blade tip of the cutter 2. When the pipe to be cut has a size of, for example, from 160 to 200 mm in diameter, the disk 1 has a diameter of about 1600 mm.

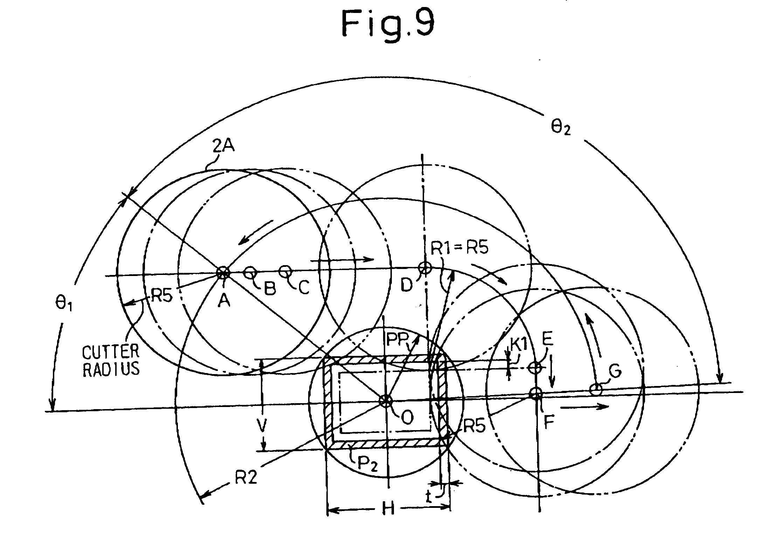

Fig. 9 illustrates the case where a pipe to be cut is a square pipe P2. As in the case of Fig. 8, the cutter 2A (cutter 2 of the upper side) is located at a position of an angle θ1 from a horizontal line that passes through the center O of the disk 1. To start the cutting from this position, the disk 1 is turned clockwise maintaining a radius R2 of rotation, and the servo motor 11 is rotated to bring the ball case 9 of the ball screw mechanism 8 close to the center O of the disk 1. Then, the center of the cutter 2A moves from a position A to a position B via the slider 4 and further moves, whereby the blade tip of the cutter 2A comes into contact with the outer circumference of the square pipe P2 to start the cutting in the horizontal direction. In this case, the center of the cutter 2A moves from the position A, through the position B, up to a position C as shown to cut the outside wall t of the square pipe P2 along the horizontal direction. When the center of the cutter 2A has arrived at a position D which is close to the end of cutting the outside wall t in the horizontal direction, the cutter 2A is turned in the clockwise direction to cut a corner portion of the square pipe P2. The cutter 2A is then moved from a position E to a position F to finish the cutting of the outside wall t in the vertical direction. After having completed the cutting in the two directions, the cutter 2A returns from a position F to a position G, and is then turned in the counterclockwise direction by an angle θ2 to return to the initial Position A. Here, θ2 = 120° to 140°.

At the same time, the outside wall t of the square pipe P2 is cut by the cutter 2B in the horizontal direction and in the vertical direction; i.e., the square pipe P2 is cut by the cutter 2.

In Fig. 9, symbol H denotes the width of the cross section of square pipe P2, V denotes the height of the cross section and RP denotes a radius of a circle in contact with the corners of the square pipe.

Being constituted as described above, the present invention makes it possible to cut the material without traversing it. Besides, since two pieces of cutters slide on the same plane of the disk, the sections by the blade tips of the pair of cutters are on the same plane and are favorably finished. Both round pipes and square pipes can be cut using the same cutting machine without the need of exchanging the cutters. Therefore, no work is required for the exchange operation, and the stroke of the cutters at the time of cutting can be decreased to equal only the outside wall. Besides, the structure of the cutting machine can be simplified.

## Claims

1. A cutting machine for cutting round and square pipes comprising a pair of sliders (4) supporting cutters (2) and drive systems (3) therefore characterized in that said sliders (4) are mounted on the surface of a rotating disk (1) at an equal distance from the center thereof, are arranged to move in a direction to approach, or move away from, each other along the diametrical line of the disk (1), the positions of the cutters (2) from the center of said disk (1) are adjusted by servo motors (11) installed on the back surface of said disk (1), and said disk (1) is rotated while bringing the blade tips of said cutters (2) into contact with a peripheral surface of a pipe that is inserted in a hole formed at the center of said disk (1) in order to cut only the outside wall of said pipe.

2. A cutting machine for cutting round and square pipes according to claim 1, wherein a ball case (9) of a ball screw mechanism (8) is fastened to said slider (4), a threaded shaft rotated (8a) by said servo motor (11) is inserted in the ball case (9) so as to engage with a ball in said case, and the amount of movement of said slider (4) is controlled by said ball screw mechanism (8).

## Patentansprüche

1. Schneidmaschine für Rund- und Vierkantrohre mit einem Paar Schieber (4) zur Aufnahme von Schneidwerkzeugen (2) sowie Antriebssystemen (3) für diese, dadurch gekennzeichnet, dass die Schieber (4) auf der Oberfläche einer drehbaren Scheibe (1) im gleichen Abstand vom Mittelpunkt derselben über die Diametrallinie der Scheibe (1) hinweg zueinander und voneinander bewegbar angeordnet sind, dass die jeweiligen Positionen der Schneidwerkzeuge (2) relativ zum Mittelpunkt der Scheibe (1) durch auf der Rückseite der Scheibe (1) angeordnete Servomotoren(11) eingestellt werden, und dass die Scheibe (1) gedreht wird, um die Schneidenspitzen der Schneidwerkzeuge (2) in Kontakt mit der Umfangsfläche eines Rohrs zu bringen, das in eine Öffnung in der Mitte der Scheibe (1) ausschliesslich zum Durchtrennen der Aussenwand dieses Rohrs eingesetzt ist.

2. Schneidmaschine für Rund- und Vierkantrohre nach Anspruch 1, dadurch gekennzeichnet, dass ein Kugelgehäuse (9) eines Kugelumlaufspindel-Mechanismus (8) auf den Schiebern (4) befestigt ist, dass eine durch den Servomotor (11) drehgetriebene Gewindewelle (8a) in das Kugelgehäuse (9) eingesetzt ist dergestalt, dass sie mit einer Kugel in diesem Gehäuse in Eingriff steht, und dass die Grösse der Bewegung der Schieber (4) durch den Kugelumlaufspindel-Mechanismus (8) gesteuert wird.

## Revendications

1. Machine de coupe destinée à couper des tuyaux ronds et carrés, comprenant une paire de coulisseaux (4) supportant des outils de coupe (2) et des systèmes d'entraînement (3) asscociés à ceux-ci, caractérisée en ce que lesdits coulisseaux (4) sont montés sur la surface d'un disque rotatif (1) à une distance égale du centre de celui-ci, en étant agencés de façon à se déplacer suivant une direction qui les fait se rapprocher ou s'écarter l'un de l'autre sur la ligne diamétrale du disque (1), et en ce que les positions des outils de coupe (2) à partir du centre dudit disque (1), sont ajustées par des servomoteurs (11) installés sur la surface arrière dudit disque (1) et ledit disque (1) est entraîné en rotation tout en amenant les bouts de lame desdits outils de coupe (2) en contact avec la surface périphérique d'un tuyau qui est inséré dans un trou formé au centre dudit disque (1) de manière à ne couper que la paroi extérieure dudit tuyau.

2. Machine de coupe destinée à couper des tuyaux ronds et carrés selon la revendication 1, dans laquelle une cage à billes (9) d'un mécanisme de vis à billes (8) est fixée à chaque coulisseau (4), un arbre fileté (8a) entraîné en rotation par ledit servomoteur (11) est inséré dans la cage à bille (9) de façon à venir en prise avec une bille dans ladite cage, et la quantité de déplacement dudit coulisseau (4) est commandée par ledit mécanisme de vis à billes (8).
